(19) **Europäisches Patentamt / European Patent Office / Office européen des brevets**

(11) **EP 4 641 177 A1**

(12) **EUROPEAN PATENT APPLICATION**
published in accordance with Art. 153(4) EPC

(43) Date of publication:
29.10.2025 Bulletin 2025/44

(21) Application number: 24747272.3

(22) Date of filing: 22.01.2024

(51) International Patent Classification (IPC):
*G01N 21/88* (2006.01)    *G01N 21/85* (2006.01)
*G01N 21/3563* (2014.01)

(52) Cooperative Patent Classification (CPC):
G01N 21/27; G01N 21/3563; G01N 21/85;
G01N 21/88; G01N 21/89

(86) International application number:
PCT/JP2024/001708

(87) International publication number:
WO 2024/157945 (02.08.2024 Gazette 2024/31)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 25.01.2023 JP 2023009718

(71) Applicants:
• Ushio Denki Kabushiki Kaisha
Tokyo 100-8150 (JP)
• Daiichi Jitsugyo Viswill Co., Ltd.
Suita-shi Osaka 564-0054 (JP)

(72) Inventors:
• NAKAYAMA, Koji
Kadoma-shi, Osaka 571-8580 (JP)
• FUJIMOTO, Masaya
Kadoma-shi, Osaka 571-8580 (JP)
• WATANABE, Katsuya
Tokyo 100-8150 (JP)
• SAHARA, Junki
Tokyo 100-8150 (JP)

(74) Representative: Maiwald GmbH
Engineering
Elisenhof
Elisenstrasse 3
80335 München (DE)

(54) **PRODUCT INSPECTION SYSTEM AND PRODUCT INSPECTION METHOD**

(57) A product inspection system includes a spectrum measurer that measures a spectrum of a product being conveyed, and a quality determiner 44 that determines quality of the product on the basis of output obtained by inputting spectral data of the product measured by the spectrum measurer into a trained model generated by machine learning. The trained model is generated by machine learning using training data including spectral data measured in mutually different postures.

FIG. 11

## Description

TECHNICAL FIELD

The present disclosure relates to a product inspection system and a product inspection method.

BACKGROUND ART

Patent Literature 1 discloses a technique for determining quality of a product at a high speed with non-destructive analysis using a spectrophotometric analysis. According to Patent Literature 1, it is possible to measure a spectrum of a product in a moving state and determine the quality of the product without stopping movement of the moving product, by which quality determination of the product can be achieved with high throughput.

RELATED-ART LITERATURE

PATENT LITERATURE

Patent Literature 1: JP 2020-159971 A

SUMMARY OF INVENTION

TECHNICAL PROBLEM

It is better to be able to determine quality of a product with higher accuracy. The present inventors have conducted intensive studies, and have conceived a technique capable of achieving, with higher accuracy, product quality determination using a spectrophotometric analysis.

One aspect of the present disclosure has been made in view of such a situation, and an object thereof is to provide a technique capable of achieving, with higher accuracy, product quality determination using a spectrophotometric analysis.

SOLUTION TO PROBLEM

In order to solve the problem described above, a product inspection system according to one aspect of the present disclosure includes a spectrum measurer that measures a spectrum of a product being conveyed, and a quality determiner that determines quality of the product on the basis of output obtained by inputting spectral data of the product measured by the spectrum measurer into a trained model generated by machine learning. The trained model is generated by machine learning using training data including spectral data measured in mutually different postures.

Another aspect of the present disclosure is a product inspection method. This method includes a step of measuring a spectrum of a product being conveyed, and a step of determining quality of the product on the basis of output obtained by inputting the measured spectral data of the product into a trained model generated by machine learning. The trained model is generated by machine learning using training data including spectral data measured in mutually different postures.

It should be noted that any combination of the above components, and the expression of the present disclosure converted between a method, an apparatus, a system, a recording medium, a computer program, and the like are also effective as an aspect of the present disclosure.

ADVANTAGEOUS EFFECTS OF INVENTION

According to one aspect of the present disclosure, product quality determination using a spectrophotometric analysis can be achieved with higher accuracy.

BRIEF DESCRIPTION OF DRAWINGS

[Fig. 1] Fig. 1 is a diagram showing a configuration of a product inspection system according to an embodiment.

[Fig. 2] Fig. 2 is a perspective view showing a state in which a conveyance mechanism in Fig. 1 conveys tablets.

[Fig. 3] Fig. 3 is a diagram showing a state when a jig in Fig. 1 is used.

[Fig. 4] Fig. 4 is a diagram for describing postures of a tablet on the conveyance mechanism in Fig. 1.

[Fig. 5] Fig. 5 is a diagram for describing postures of the tablet on the conveyance mechanism in Fig. 1.

[Fig. 6] Fig. 6 is a diagram for describing postures of the tablet on the conveyance mechanism in Fig. 1.

[Fig. 7] Fig. 7 is a diagram for describing postures of the tablet on the conveyance mechanism in Fig. 1.

[Fig. 8] Fig. 8 is a diagram for describing postures of the tablet on the conveyance mechanism in Fig. 1.

[Fig. 9] Fig. 9 is a diagram for describing postures of the tablet on the conveyance mechanism in Fig. 1.

[Fig. 10] Fig. 10 is a diagram for describing postures of the tablet on the conveyance mechanism in Fig. 1.

[Fig. 11] Fig. 11 is a block diagram showing a control system of the product inspection system in Fig. 1.

[Fig. 12] Fig. 12 is a flowchart for describing operation in a preparation phase.

[Fig. 13] Fig. 13 is a flowchart for describing operation of quality determination in an inspection phase.

[Fig. 14] Fig. 14 is a diagram showing a configuration of the product inspection system according to a modification.

## DESCRIPTION OF EMBODIMENTS

A product inspection system according to an embodiment measures a spectrum of a product by using a spectrophotometric analysis, estimates a content of a specific constituent of the product by inputting the measured spectrum of the product into a trained model (calibration model), and determines quality of the product on the basis of the estimated content of the specific constituent. The "trained model" is a model trained in machine learning, and is a trained model trained to estimate (output) the content of the specific constituent contained in the product, when spectral data of the product is input. The "specific constituent" is a specific constituent contained in the product, and, although not particularly limited, may be a constituent that most affects quality of the product, or may be a constituent contained in a largest amount in the product.

In the product inspection system, in order to inspect quality of products at a high speed (for example, 10 milliseconds or less per product), spectra of the products are measured by irradiating the products with light while the products are being conveyed and moved by a conveyance mechanism, that is, without stopping the movement of the products.

However, because the products are arranged on the conveyance mechanism at a high speed, postures of the arranged products may vary although depending on the arrangement.

Furthermore, the conveyance mechanism ages due to use. For example, when the conveyance mechanism includes a conveying belt, the conveying belt stretches and bends because of aging due to use. Therefore, postures of the products on the conveyance mechanism may be different over time.

If the postures of the products on the conveyance mechanism are different, postures of the products with respect to a measurer that measures the spectra are also different. Therefore, the measured spectra are affected, and accuracy of the estimation of the content of the specific constituent by the trained model and thus accuracy of quality determination are affected.

Therefore, in the present embodiment, the trained model is generated in consideration of a fact that postures of the products when spectra thereof are measured may be different for each product or over time. As a result, the content of the specific constituent of the products can be estimated with higher accuracy, and quality determination with high throughput and higher accuracy can be achieved.

More specifically, in a "preparation phase", the product inspection system measures a spectrum of a product with which content of the specific constituent is known in various postures intentionally, and, by using the spectra, generates a trained model as training data. In an "inspection phase", the product inspection system measures spectra of the products being conveyed and moved on the conveyance mechanism without stopping the movement, inputs the spectra into the trained model generated in the preparation phase, estimates the content of the specific constituent of the products, and determines quality of the products.

Hereinafter, a case where the product is a tablet will be exemplified. The tablet is typically, but not limited to, a medicine, particularly a pharmaceutical product, and may be, for example, a health food or a supplement.

It should be noted that the product may be a product different from a tablet, as long as the product is in the solid phase and the content of the specific constituent affects the quality thereof. In this case, a technical idea described later may be applied to the different product as long as there is no contradiction, and thus the "tablet" in description below may be replaced with the different product.

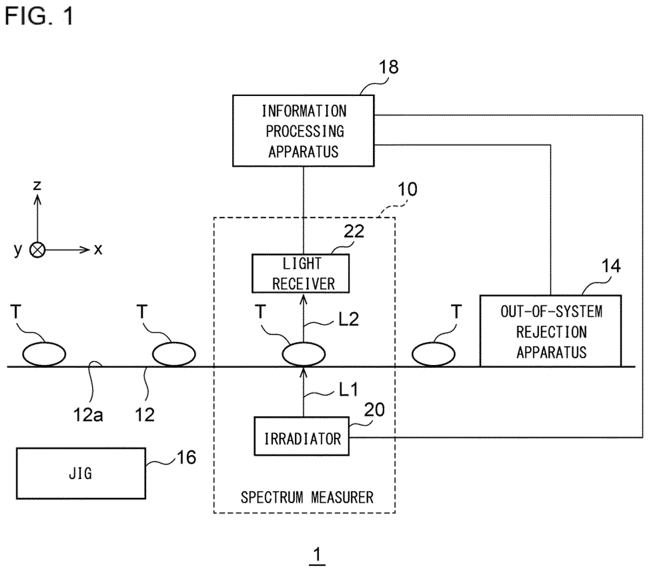

Fig. 1 is a diagram showing a configuration of a product inspection system 1 according to the embodiment. The product inspection system 1 includes a spectrum measurer 10, a conveyance mechanism 12, an out-of-system rejection apparatus 14, a jig 16, and an information processing apparatus 18.

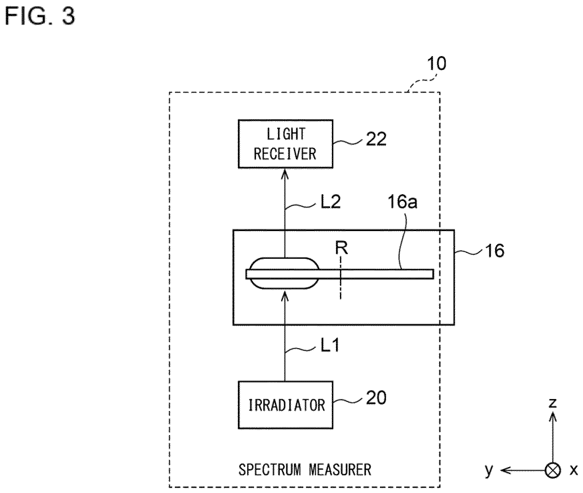

The spectrum measurer 10 irradiates a tablet T with light and measures a spectrum of transmitted light therefrom. In the preparation phase, the spectrum measurer 10 measures the spectrum of the tablet T held by the jig 16 as described later with reference to Fig. 3. The tablet T is a tablet with which the content of the specific constituent is known, and is also referred to as a sample tablet T. Furthermore, in the inspection phase, the spectrum measurer 10 measures spectra of tablets T sequentially conveyed by the conveyance mechanism 12, without stopping movement of the tablets T as shown in Fig. 1. These tablets T are tablets as inspection targets with which the content of the specific constituent is unknown.

The spectrum measurer 10 includes an irradiator 20 and a light receiver 22. The irradiator 20 irradiates a tablet with measurement light L1. The light receiver 22 receives (detects) transmitted light L2 from a tablet T when the irradiator 20 irradiates the tablet T with the measurement light L1.

An example of the irradiator 20 and the light receiver 22 will be described below. It goes without saying that the irradiator 20 and the light receiver 22 are not limited to the following configurations. The irradiator 20 may include a broadband pulsed light source and a pulse extension element that extends a pulse width of emitted pulsed light such that a relation between a wavelength and an elapsed time in one pulse is 1 : 1. The pulse extension element may include arrayed waveguide gratings that, according to wavelengths, spatially divide the pulsed light emitted from the pulsed light source, and a plurality of fibers in a number corresponding to the number of the wavelengths divided by the arrayed waveguide gratings.

The description is returned to Fig. 1. The measurement light L1 is applied to a first surface (lower surface in Fig. 1) of a tablet T, transmitted through the tablet T, and emitted as transmitted light (hereinafter, also referred to as object light) L2 from a second surface (upper surface). When a spectrum of the measurement light L1 is denoted by $I_{L1}(\lambda)$ and a wavelength dependence of a transmittance of the object light L2 is denoted by $X(\lambda)$, a spectrum $I_{L2}(\lambda)$ of the object light L2 is expressed by the following mathematical formula (1).

$$I_{L2}(\lambda) = X(\lambda) \times I_{L1}(\lambda) \ \cdots (1)$$

The light receiver 22 is provided on an opposite side of the irradiator 20 with the conveyance mechanism 12 interposed therebetween, and detects diffusely transmitted light emitted from the second surface of the tablet T. The light receiver 22 includes a photodetector that detects the diffusely transmitted light from the tablet T as the object light L2. In addition to the photodetector, the light receiver 22 may include an A/D converter, a condensing optical system, and the like, which are not shown in Fig. 1. The photodetector is a photoelectric conversion element that converts an optical signal to an electric signal, and examples thereof include a photodiode, an avalanche photodiode, a phototransistor, a photomultiplier tube using a photoelectric effect, a photoconductive element using a change in electrical resistance due to light irradiation, and the like.

The spectrum measurer 10 generates a spectrum $I_{L2}(\lambda)$ of the object light L2 on the basis of an output signal from the light receiver 22. Then, on the basis of the spectrum $I_{L1}(\lambda)$ of the measurement light L1 and the spectrum $I_{L2}(\lambda)$ of the object light L2, the transmittance $X(\lambda)$ of the tablet T is calculated by the following mathematical formula (2).

$$X(\lambda) = I_{L2}(\lambda)/I_{L1}(\lambda) \ \cdots (2)$$

As a modification, the spectrum measurer 10 may measure a spectrum of reflected light from the tablet T. In this case, for example, the light receiver 22 may be disposed on the same side as the irradiator 20 with respect to conveyance surfaces 12a of the conveyance mechanism 12, and may receive reflected light from the tablet T when the irradiator 20 irradiates the tablet T with the measurement light L1.

As a further modification, the spectrum measurer 10 may measure spectra of both the transmitted light L2 and reflected light from the tablet T.

The measurement light L1 is light that allows estimation of the content of the specific constituent of the tablet T. The measurement light L1 is not particularly limited, but is, for example, light including a wavelength range in a near-infrared region, specifically, light in a wavelength range of 1000 nm or more and 1300 nm or less, more preferably light in a wavelength range of 1100 nm or more and 1200 nm or less. The measurement light L1 may be pulsed light.

The conveyance mechanism 12 is a mechanism that conveys tablets T in a direction in which the tablets T are arranged in the inspection phase. The conveyance mechanism 12 conveys the tablets T from left to right in Fig. 1. The tablets T may be sucked by a suction mechanism (not shown) and attracted to the conveyance surfaces 12a. In this case, the tablets T are stably conveyed.

Hereinafter, a direction in which the conveyance mechanism 12 conveys the tablets T is referred to as a conveyance direction x, a direction orthogonal to the conveyance direction x is referred to as a width direction y, and a direction orthogonal to both the conveyance direction x and the width direction is referred to as a height direction z.

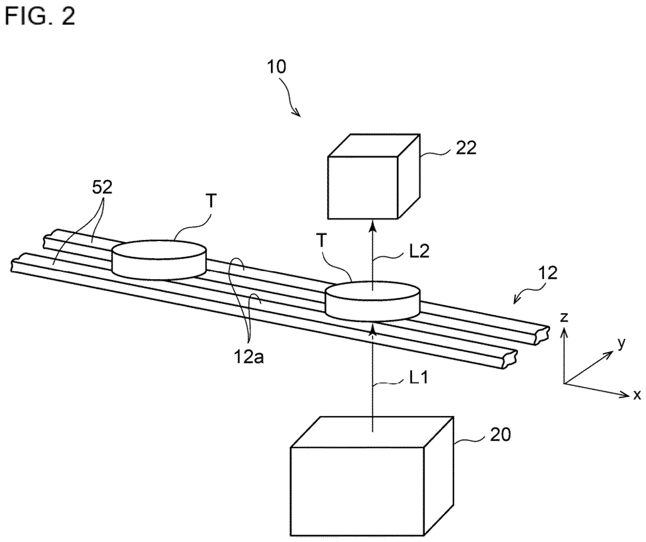

Fig. 2 is a perspective view showing a state in which the conveyance mechanism 12 conveys the tablets T. As one example, the conveyance mechanism 12 includes a pair of conveying belts 52 as shown in Fig. 2. The pair of conveying belts 52 is arranged at a predetermined interval in the width direction y. The pair of conveying belts 52 is an endless belt, and is wound on a plurality of rollers (not shown) of which rotation axes face the width direction y. The tablets T are placed on the pair of conveying belts 52 so as to extend across the conveying belts 52. When a driver (not shown) such as a motor drives the rollers, the pair of conveying belts 52 rotates accordingly, and the tablets T are conveyed. The measurement light L1 from the irradiator 20 passes between the pair of conveying belts 52 and is applied to each of the tablets T.

Returning to Fig. 1, the information processing apparatus 18 integrally controls the product inspection system 1. In the preparation phase, by using training data to be described in detail later, the information processing apparatus 18 generates a trained model used for quality determination of the tablets T. Furthermore, in the inspection phase, as will be described in detail later, the information processing apparatus 18 determines quality of the tablets T by using the trained model.

In the inspection phase, the out-of-system rejection apparatus 14 rejects only a tablet T determined in the quality determination to be a defective product outside the system. A configuration of the out-of-system rejection apparatus 14 is not particularly limited, and the out-of-system rejection apparatus 14 is only required to be configured by using a known technology or technology available in the future.

Fig. 3 is a diagram showing a state when the jig 16 in Fig. 1 is used. Fig. 3 is a diagram of the spectrum measurer 10 and a periphery thereof as viewed in the conveyance direction x. The jig 16 is provided between the irradiator 20 and the light receiver 22. In this example, the conveyance mechanism 12 is retracted from a position crossing between the irradiator 20 and the light receiver 22. Alternatively, the spectrum measurer 10 is retracted from a position where the conveyance mechanism 12 crosses between the irradiator 20 and the light receiver 22.

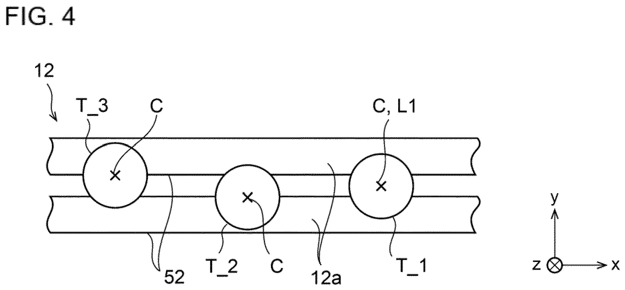

The jig 16 is used to hold a sample tablet T in various postures. Specifically, the jig 16 is used to reproduce differences in posture for each tablet T in spectrum measurement, which will be described later with reference to Figs. 4 to 8. In the preparation phase, the spectrum measurer 10 measures a spectrum to be used as the training data, in a state where the jig 16 holds the sample tablet T in a desired posture.

For example, the jig 16 includes a disk 16a that rotates about a rotation axis R. By rotating a disk 16a holding a tablet T, a state in which the tablet T is conveyed at a conveying speed by the conveyance mechanism 12 is reproduced. In this state, the spectrum measurer 10 measures a spectrum of the tablet T held by the disk 16a, the spectrum being to be used as the training data.

It should be noted that, in measurement of the spectrum in the preparation phase, that is, the measurement of the spectrum to be used as the training data, the spectrum may be measured by a spectrum measurer (not shown) that is different from the spectrum measurer 10 but configured similarly to the spectrum measurer 10. The different spectrum measurer is only required to be provided at a position where the conveyance mechanism 12 does not cross between an irradiator thereof and a light receiver thereof.

Next, with reference to Figs. 4 to 8, different postures for each tablet T in the conveyance mechanism 12 will be described. It should be noted that the "different postures" here include a case where positions in the width direction y and height direction z are different. Furthermore, here, a case where the conveyance mechanism 12 includes a pair of conveying belts 52 will be described.

Fig. 4 is a diagram of the conveyance mechanism 12 as viewed in a direction perpendicular to the conveyance surfaces 12a. In this example, positions of tablets T in the width direction y are different from each other. Although depending on how the tablets T are arranged, positions thereof in the width direction may be displaced, because the tablets T are arranged on the conveyance mechanism 12 at a high speed (for example, 10 milliseconds or less per tablet).

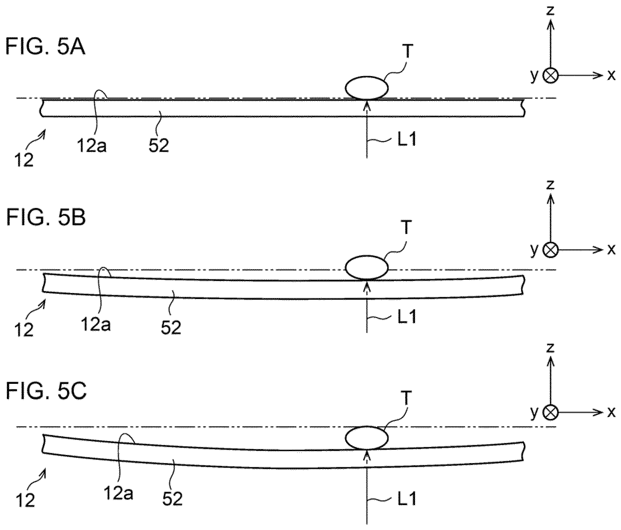

Figs. 5(a) to 5(c) are diagrams of the conveyance mechanism 12 as viewed in the width direction y. In Figs. 5(a) to 5(c), positions of the tablets T in the height direction z with respect to a predetermined reference conveyance surface S are different from each other at an irradiation position at which each of the tablets T is irradiated with the measurement light L1. The reference conveyance surface S is not particularly limited, but is, for example, a surface that matches the conveyance surface before aging occurs in the conveyance mechanism 12. In Fig. 5(a), the conveyance surface coincides with the reference conveyance surface S. In Figs. 5(b) and 5(c), the conveyance surfaces 12a are lower than the reference conveyance surface S because the conveying belts are stretched and bent due to aging, for example. In Figs. 5(a) to 5(c), because heights of the conveyance surfaces 12a at the irradiation position are different from each other, the heights with respect to the reference conveyance surface S are different from each other.

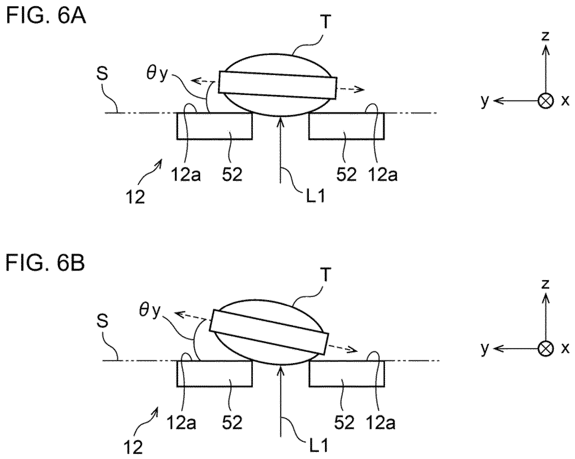

Figs. 6(a) and 6(b) are diagrams of the conveyance mechanism 12 as viewed in the conveyance direction x. In Figs. 6(a) and 6(b), angles $\theta y$ of tablets T with respect to a predetermined reference conveyance surface S, the angles $\theta y$ being about an axis parallel to the conveyance direction x, are different from each other at the irradiation position at which each of the tablets T is irradiated with the measurement light L1. The reference conveyance surface S is not particularly limited, but is, for example, a surface that matches the conveyance surface before aging occurs in the conveyance mechanism 12. For example, when a curved outer surface portion of each of the tablets T is in contact with the conveyance surface 12a, the angles $\theta y$ of the tablets T with respect to the reference conveyance surface S may be different for each tablet T.

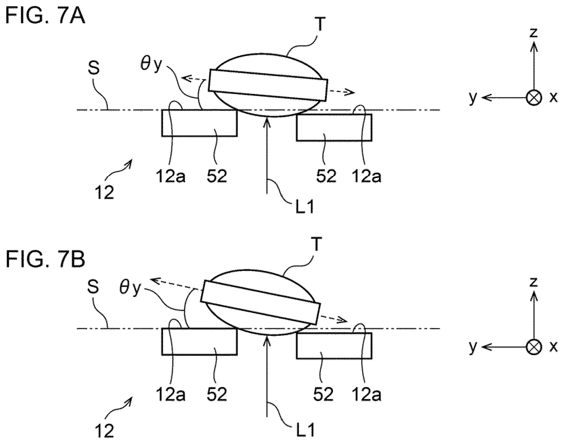

Figs. 7(a) and 7(b) are diagrams of the conveyance mechanism 12 as viewed in the conveyance direction x. In Figs. 7(a) and 7(b), as in Figs. 6(a) and 6(b), the angles $\theta y$ of the tablets T at the irradiation position are different from each other. For example, the angles $\theta y$ may vary depending on a difference in a degree of aging progress of the pair of conveying belts 52.

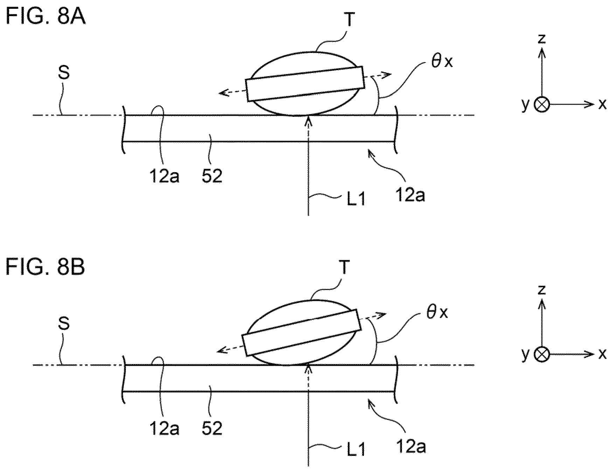

Figs. 8(a) and 8(b) are diagrams of the conveyance mechanism 12 as viewed in the width direction y. In Figs. 8(a) and 8(b), angles $\theta x$ of the tablets T with respect to the predetermined reference conveyance surface S, the angles $\theta x$ being about an axis parallel to the width direction y, are different from each other at the irradiation position at which each of the tablets T is irradiated with the measurement light L1. The reference conveyance surface S is not particularly limited, but is, for example, a surface that matches the conveyance surface before aging occurs in the conveyance mechanism 12. For example, when a curved outer surface portion of each of the tablets T is in contact with the conveyance surface 12a, the angles $\theta x$ of the tablets T with respect to the reference conveyance surface S may be different for each tablet T.

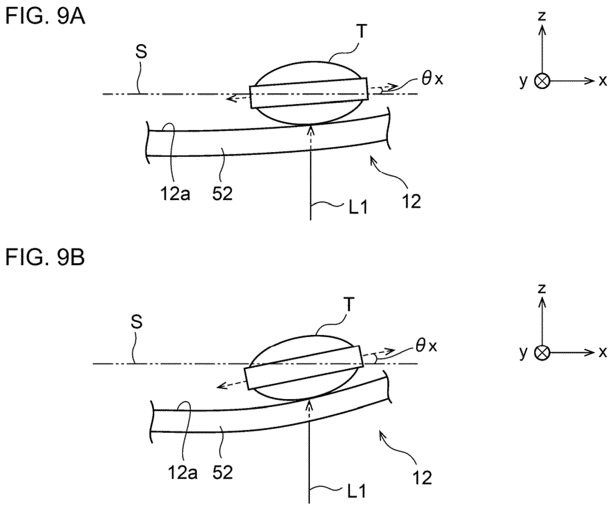

Figs. 9(a) and 9(b) are diagrams of the conveyance mechanism 12 as viewed in the width direction y. In Figs. 9(a) and 9(b), as in Figs. 8(a) and 8(b), the angles $\theta x$ of the tablets T at the irradiation position are different from each other. For example, the angle $\theta x$ may vary depending on a difference in aging of the conveying belts 52.

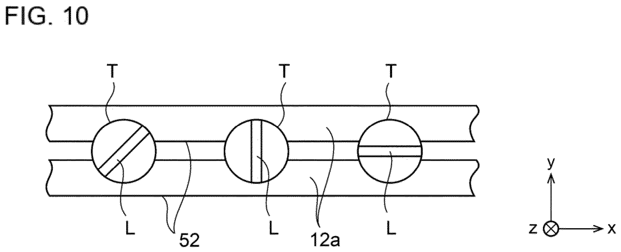

Fig. 10 is a diagram of the conveyance mechanism 12 as viewed in the direction perpendicular to the conveyance surfaces 12a. In Fig. 8, the tablets T have a non-rotationally symmetric shape, and orientations about axes perpendicular to the conveyance surface 12a (in other words, about an axis parallel to the height direction z) are different from each other. Here, each of the tablets T has a break line L, and directions in which the break lines L extend are different from each other as viewed in a direction perpendicular to the conveyance surface 12a.

Although a case where the conveyance mechanism 12 includes the pair of conveying belts 52 has been described here, it should be noted that at least one of the postures in Figs. 4 to 10 may be different even if the conveyance mechanism 12 has another configuration.

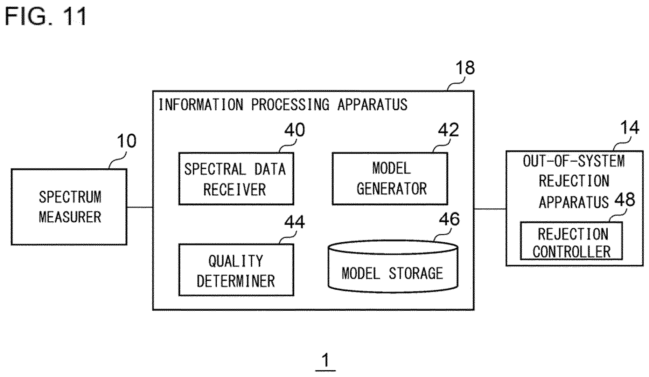

Fig. 11 is a block diagram showing a control system of the product inspection system 1. Each block shown here can be implemented by an element such as a central processing unit (CPU) of a computer or a mechanical apparatus in terms of hardware, and can be implemented by a computer program or the like in terms of software. Here, functional blocks implemented by cooperation thereof are shown. Therefore, it is understood by those skilled in the art who have read this specification that these functional blocks can be implemented in various forms by a combination of hardware and software.

The information processing apparatus 18 includes a spectral data receiver 40, a model generator 42, a quality determiner 44, and a model storage 46. It should be noted that only components of the information processing apparatus 18 that are interest in the present embodiment are shown.

The number of physical apparatuses (housings) included in the information processing apparatus 18 is not limited, and the information processing apparatus 18 may be implemented as a single apparatus or may be implemented by cooperation of a plurality of apparatuses. For example, the information processing apparatus 18 may be implemented by cooperation of a first apparatus and a second apparatus, the first apparatus may include the spectral data receiver 40, the model generator 42, and the model storage 46, and the second apparatus may include the quality determiner 44.

The model storage 46 stores the trained model (calibration model) generated by the model generator 42 described later.

The spectral data receiver 40 receives the spectral data of the sample tablet T measured by the spectrum measurer 10 in the preparation phase. It should be noted that a spectrum of the sample tablet T may be measured by a spectrum measurer different from the spectrum measurer 10 as described above, and in this case, the spectral data receiver 40 receives the spectral data of the sample tablet T measured by the different spectrum measurer.

Furthermore, in the inspection phase, the spectral data receiver 40 receives spectral data of the tablets T sequentially measured by the spectrum measurer 10.

In the preparation phase, the model generator 42 performs machine learning using the training data to generate the trained model that outputs (estimates) the content of the specific constituent of a tablet T when the spectral data of the tablet T are input. The trained model is only required to be configured by using any machine learning method that is known or available in the future. The model generator 42 stores the generated trained model in the model storage 46. The training data will be described later.

In the inspection phase, the quality determiner 44 determines the quality of the tablet T by using the trained model stored in the model storage 46. Specifically, the quality determiner 44 inputs the spectral data received by the spectral data receiver 40 into the trained model, thereby estimating (outputting) the content of the specific constituent of the tablet T to the trained model.

Next, the quality determiner 44 determines the quality of the tablet T on the basis of the content of the specific constituent estimated by the trained model. The quality determiner 44 determines that the tablet T is a non-defective product when a rate of the estimated content of the specific constituent (that is, the content of the specific constituent actually contained in the tablet T) against the content of the specific constituent supposed to be contained in the tablet T (hereinafter, the rate is referred to as a specified content rate) is within a predetermined threshold range when, for example, the specified content rate is 98% or more and 102% or less, and determines that the tablet T is a defective product when the specified content rate is out of the threshold range. The quality determiner 44 may determine the quality of the tablet T by further considering at least another one element in addition to the content of the specific constituent. The another element may be, for example, appearance of the tablet T. In this case, when appearance of the tablet T is poor, the quality determiner 44 determines that the tablet T is a defective product, even if the specified content rate is within the predetermined threshold range. Whether or not the appearance of the tablet T is poor may be determined by performing image analysis on a captured image obtained by capturing the tablet T with an imager (not shown). For example, the appearance of the tablet T may be determined to be poor when deformation such as chipping or cracking has occurred to the tablet T.

The out-of-system rejection apparatus 14 includes an rejection controller 48. The rejection controller 48 integrally controls the out-of-system rejection apparatus 14. The rejection controller 48 controls the out-of-system rejection apparatus 14 to reject a tablet T determined by the quality determiner 44 to be a defective product out of the system. Because the tablet T determined to be a defective product is automatically rejected, it is possible to prevent an accident in which the defective product is shipped.

Next, "training data" will be described. The training data is a plurality of data sets for a plurality of sample tablets T with which the content of the specific constituent is known, and is a plurality of data sets each including a content of the specific constituent and spectral data.

The plurality of sample tablets T includes sample tablets T having various contents, that is, sample tablets T with which content of the specific constituent is different from each other. Preferably, the plurality of sample tablets T includes a sample tablet T with which content of the specific constituent is 100%.

Preferably, the plurality of sample tablets T includes a sample tablet T that can cover a range of possible content of the specific constituent of the tablets T. That is, preferably, the plurality of sample tablets T includes a sample tablet T with which the content of the specific constituent is within an expected range, a sample tablet T with which the content of the specific constituent is less than the expected range, and a sample tablet T with which the content of the specific constituent is more than the expected range.

Variations in content of the specific constituent contained in the plurality of sample tablets T may affect accuracy of a model to be generated. Therefore, variations in content of the specific constituent contained in the plurality of sample tablets T may be determined by trial and error, for example. For example, in a case where the range of the possible content of the specific constituent of the tablets T is 90% to 110%, sample tablets T with the content of the specific constituent in increments of 2% in a range of 88% to 112%, that is, the sample tablets T with which the content of the specific constituent is 88%, 90%, 92%, ..., and 112% may be prepared as the plurality of sample tablets T.

The plurality of data sets includes data sets of spectral data measured in mutually different postures. The mutually different postures are postures that are different from each other in at least one of the position in the width direction y, the position in the height direction z, the angle $\theta y$ of the tablet T with respect to the predetermined reference conveyance surface (that is, the angle $\theta y$ about the axis parallel to the conveyance direction x), the angle $\theta x$ of the tablet T with respect to the predetermined reference conveyance surface (that is, the angle $\theta x$ about the axis parallel to the width direction y), and the orientation about the axis perpendicular to the conveyance surface 12a (that is, about the axis parallel to the height direction z) described in Figs. 4 to 10.

The plurality of data sets may include only one data set measured in one posture for each sample tablet T, or may include a plurality of data sets measured in a plurality of postures for each sample tablet T.

The above is a basic configuration of the product inspection system 1. Next, operation thereof will be described.

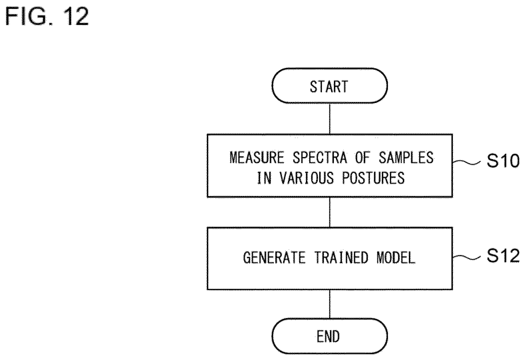

Fig. 12 is a flowchart for describing operation in the preparation phase. First, spectra of the plurality of sample tablets T with which contents of the specific constituent are known are measured in various postures (S10). Next, a trained model to be used for quality determination of the tablets T is generated by using the training data including the measured spectral data of the sample tablets T (S12).

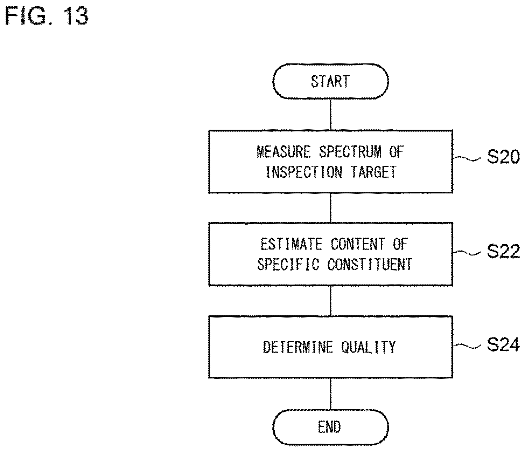

Fig. 13 is a flowchart for describing operation of the quality determination in the inspection phase. Processing in Fig. 13 is repeatedly performed at a predetermined cycle (for example, a predetermined cycle of 10 milliseconds or less), in other words, for each tablet conveyed sequentially. First, a spectrum of a tablet T being conveyed and moved by the conveyance mechanism 12 is measured without the movement being stopped (S20). Next, the content of the specific constituent of the tablet T is estimated by inputting the measured spectral data into the trained model (S22). Next, the quality of the tablet T is determined on the basis of the estimated content of the specific constituent (S24).

According to the present embodiment, in the preparation phase, the trained model is created by using the training data including the spectral data of the plurality of sample tablets T with which the contents of the specific constituent are known, the spectral data being measured intentionally in various postures, and, in the inspection phase, the content of the specific constituent of a tablet is estimated by using the trained model to determine quality of the tablet. That is, because the content of the specific constituent is estimated on the basis of the trained model in which it is considered in advance that postures of the tablets T when measuring spectra thereof may be different for each tablet T or over time, the content of the specific constituent can be estimated with higher accuracy, and the quality of the tablets T can be determined with higher accuracy.

The present disclosure has been described above on the basis of the embodiment. It is to be understood by those skilled in the art that the embodiment is merely an example, that various modifications can be made to combinations of the respective components and the respective processing processes, and that such modifications are also within the scope of the present disclosure.

(First modification)

In the embodiment, a case has been described where sample tablets T are held in various postures by using the jig 16, and the spectra of the sample tablets T used for the training data, which are the spectra of the sample tablets T in various postures, are measured. However, the present disclosure is not limited to measurement of the spectra by using the jig 16, as long as the spectra of the sample tablets T can be measured in various postures.

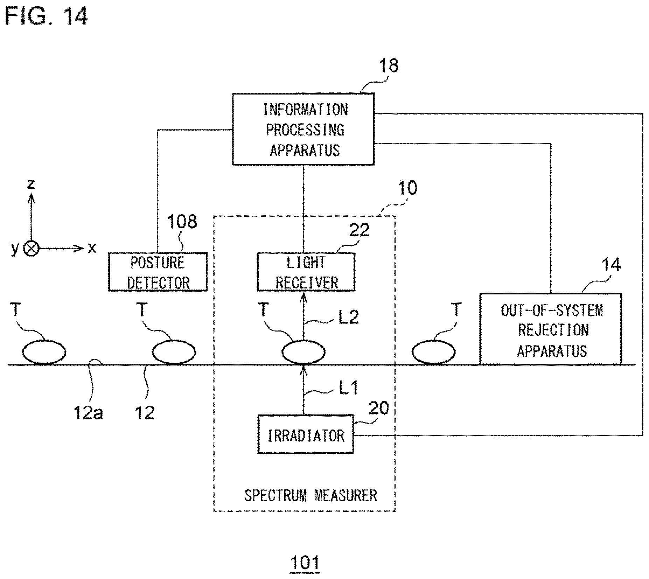

Fig. 14 is a diagram showing a configuration of a product inspection system 101 according to a modification. Hereinafter, differences from the embodiment will be mainly described.

The product inspection system 101 includes the spectrum measurer 10, the conveyance mechanism 12, the out-of-system rejection apparatus 14, the information processing apparatus 18, and a posture detector 108. That is, the product inspection system 101 of the present modification does not include the jig 16.

In the preparation phase according to the present modification, similarly to the inspection phase, the conveyance mechanism 12 sequentially conveys the sample tablets T, and the spectrum measurer 10 measures the spectra of the sample tablets T sequentially conveyed by the conveyance mechanism 12, without stopping movement of the sample tablets T.

In the preparation phase, the posture detector 108 detects postures of the sample tablets T conveyed by the conveyance mechanism 12. The posture detector 108 may detect the postures of the sample tablets T on an upstream side of the spectrum measurer 10 as shown in the drawing, may detect the postures of the sample tablets T on a downstream side of the spectrum measurer 10, or may detect the postures of the sample tablets T at a position at which the spectra are measured by the spectrum measurer 10 (for example, an irradiation position at which the sample tablets T are irradiated with measurement light L1 from the irradiator 20).

A configuration of the posture detector 108 is not particularly limited. The posture detector 108 may include, for example, at least one camera. In this case, the posture detector 108 may be able to capture images of the tablets T from three directions, the conveyance direction x, the width direction y, and the height direction z. Furthermore, for example, the posture detector 108 may include an ultrasonic sensor. In any case, the posture detector 108 is only required to detect the postures of the sample tablets T.

A plurality of data sets of the training data according to the present modification includes data set of spectral data of the sample tablets T, the spectral data being measured while the sample tablets T are conveyed by the conveyance mechanism 12 as described above. The plurality of data sets of the training data is not particularly limited, but may be data selected by a user from among the spectral data of the measured sample tablets T. The user is only required to select, on the basis of a result of detecting the postures of the sample tablets T by the posture detector 108, a plurality of data sets of the training data so that data sets of spectral data measured in various postures are included, for example, with reference to images of the sample tablets T captured by at least one camera as the posture detector 108. For example, the user may select a plurality of data sets of the training data so as to include a data set of spectral data for which at least one of the position in the width direction y, the angle θy of the tablet T with respect to the predetermined reference conveyance surface, the angle θx of the tablet T with respect to the predetermined reference conveyance surface, and the orientation about the axis perpendicular to the conveyance surface 12a is measured in mutually different postures.

According to the present modification, it is possible to achieve effects similar to those of the embodiment.

(Second modification)

In the embodiment, the spectrum measurer 10 and the information processing apparatus 18 are communicably connected. However, the information processing apparatus 18 may be provided inside the spectrum measurer 10.

(Third modification)

In the embodiment, a case has been described where the trained model used in the quality determination is learned to output (estimate) a content of the specific constituent of a tablet when the spectral data of the tablet is input. However, the present disclosure is not limited thereto, and the trained model may be learned to output (estimate) quality of the tablet in terms of the content of the specific constituent.

INDUSTRIAL APPLICABILITY

The present invention relates to a product inspection system and a product inspection method.

REFERENCE SIGNS LIST

1 product inspection system, 10 spectrum measurer, 44 quality determiner

**Claims**

1. A product inspection system comprising:

   a spectrum measurer structured to measure a spectrum of a product being conveyed; and
   a quality determiner structured to determine quality of the product on the basis of output obtained by inputting spectral data of the product measured by the spectrum measurer into a trained model generated by machine learning, wherein the trained model is generated by machine learning using training data including spectral data measured in mutually different postures.

2. The product inspection system according to claim 1, wherein the trained model is structured to output content of a specific constituent.

3. The product inspection system according to claim 1, wherein the spectral data measured in mutually different postures includes spectral data measured at positions different from each other in position in directions orthogonal in a conveyance direction.

4. The product inspection system according to claim 1, wherein the spectral data measured in mutually different postures includes spectral data measured in postures different from each other in height with respect to a reference conveyance surface.

5. The product inspection system according to claim 1, wherein the spectral data measured in mutually different postures includes spectral data measured in postures different from each other in angle with respect to a reference conveyance surface as viewed in a conveyance direction.

6. The product inspection system according to claim 1, wherein the spectral data measured in mutually different postures includes spectral data measured in postures different from each other in angle with respect to a reference conveyance surface as viewed in a direction orthogonal to a conveyance direction.

7. The product inspection system according to claim 1, wherein the spectral data measured in mutually different postures includes spectral data measured in postures different from each other in orientation about an axis perpendicular to a conveyance surface in a case where a product has a non-rotationally symmetric shape.

8. The product inspection system according to claim 1, wherein the spectral data measured in mutually different postures includes spectral data measured in postures different from each other in directions in which break lines extend as viewed in a direction perpendicular to a conveyance surface in a case where a product is a tablet having a break line.

9. The product inspection system according to claim 1, wherein the quality determiner is structured to determine the quality of the product further on the basis of appearance of the product.

10. A product inspection method comprising:

a step of measuring a spectrum of a product being conveyed; and
a step of determining quality of the product on the basis of output obtained by inputting measured spectral data of the product into a trained model generated by machine learning,
wherein the trained model is generated by machine learning using training data including spectral data measured in mutually different postures.

FIG. 1

FIG. 2

FIG. 3

FIG. 4

FIG. 5A

z

y ⊗ → x

T

12
12a    52

L1

FIG. 5B

z

y ⊗ → x

T

12
12a    52

L1

FIG. 5C

z

y ⊗ → x

T

12
12a    52

L1

FIG. 6A

FIG. 6B

FIG. 7A

FIG. 7B

FIG. 8A

FIG. 8B

FIG. 9A

FIG. 9B

FIG. 10

FIG. 11

INFORMATION PROCESSING APPARATUS 18

SPECTRUM MEASURER 10

SPECTRAL DATA RECEIVER 40

MODEL GENERATOR 42

QUALITY DETERMINER 44

MODEL STORAGE 46

OUT-OF-SYSTEM REJECTION APPARATUS 14

REJECTION CONTROLLER 48

1

FIG. 12

```
                        ┌──────────────┐
                        │    START     │
                        └──────┬───────┘
                               │
            ┌──────────────────────────────────┐
            │  MEASURE SPECTRA OF SAMPLES       │~ S10
            │      IN VARIOUS POSTURES          │
            └──────────────────────────────────┘
                               │
            ┌──────────────────────────────────┐
            │      GENERATE TRAINED MODEL       │~ S12
            └──────────────────────────────────┘
                               │
                        ┌──────────────┐
                        │     END      │
                        └──────────────┘
```

FIG. 13

```
        ┌──────────────┐
        │    START     │
        └──────┬───────┘
               │
    ┌──────────┴──────────┐
    │  MEASURE SPECTRUM OF │  ～ S20
    │   INSPECTION TARGET  │
    └──────────┬──────────┘
               │
    ┌──────────┴──────────┐
    │  ESTIMATE CONTENT OF │  ～ S22
    │  SPECIFIC CONSTITUENT│
    └──────────┬──────────┘
               │
    ┌──────────┴──────────┐
    │  DETERMINE QUALITY   │  ～ S24
    └──────────┬──────────┘
               │
        ┌──────┴───────┐
        │     END      │
        └──────────────┘
```

FIG. 14

# INTERNATIONAL SEARCH REPORT

| International application No. |
| --- |
| **PCT/JP2024/001708** |

| | |
| --- | --- |
| **A.** | **CLASSIFICATION OF SUBJECT MATTER** |

*G01N 21/88*(2006.01)i; *G01N 21/85*(2006.01)i; *G01N 21/3563*(2014.01)i
FI:   G01N21/88 J; G01N21/85 A; G01N21/3563

According to International Patent Classification (IPC) or to both national classification and IPC

| | |
| --- | --- |
| **B.** | **FIELDS SEARCHED** |

Minimum documentation searched (classification system followed by classification symbols)

    G01N21/00-21/958; G01J3/00-3/52; B07C5/342; G06N3/00-99/00; G06T1/00-19/20

Documentation searched other than minimum documentation to the extent that such documents are included in the fields searched

    Published examined utility model applications of Japan 1922-1996
    Published unexamined utility model applications of Japan 1971-2024
    Registered utility model specifications of Japan 1996-2024
    Published registered utility model applications of Japan 1994-2024

Electronic data base consulted during the international search (name of data base and, where practicable, search terms used)

    JSTPlus/JMEDPlus/JST7580 (JDreamIII)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| A | JP 2021-55998 A (SHARP KABUSHIKI KAISHA) 08 April 2021 (2021-04-08)<br>claim 1, paragraphs [0033]-[0047], [0102]-[0123], fig. 1-2, 4 | 1-10 |
| A | JP 5-232030 A (BALL CORP.) 07 September 1993 (1993-09-07)<br>paragraphs [0018], [0020], [0024], fig. 1 | 1-10 |
| A | JP 2019-203691 A (OMRON CORPORATION) 28 November 2019 (2019-11-28)<br>paragraphs [0032]-[0044], fig. 1, 4 | 1-10 |
| A | US 2022/0331841 A1 (DIGIMARC CORPORATION) 20 October 2022 (2022-10-20) | 1-10 |
| A | US 5526119 A (ELOP ELECTRO-OPTICS INDUSTRIES, LTD.) 11 June 1996 (1996-06-11) | 1-10 |

☐ Further documents are listed in the continuation of Box C.    ☑ See patent family annex.

| | |
| --- | --- |
| *   Special categories of cited documents: | "T"  later document published after the international filing date or priority date and not in conflict with the application but cited to understand the principle or theory underlying the invention |
| "A"  document defining the general state of the art which is not considered to be of particular relevance | |
| "D"  document cited by the applicant in the international application | "X"  document of particular relevance; the claimed invention cannot be considered novel or cannot be considered to involve an inventive step when the document is taken alone |
| "E"  earlier application or patent but published on or after the international filing date | |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
| --- | --- |
| **28 February 2024** | **12 March 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/001708**

| Patent document cited in search report | | | Publication date (day/month/year) | Patent family member(s) | | | Publication date (day/month/year) |
|---|---|---|---|---|---|---|---|
| JP | 2021-55998 | A | 08 April 2021 | WO | 2019/130777 | A1 | |
| JP | 5-232030 | A | 07 September 1993 | US | 5120126 | A | |
| | | | | column 6, lines 10-27, column 7, lines 39-60, column 8, lines 40-63, fig. 1 | | | |
| | | | | US | 5374988 | A | |
| | | | | US | 5245399 | A | |
| | | | | GB | 2256707 | A | |
| | | | | DE | 4219560 | A1 | |
| | | | | FR | 2677563 | A1 | |
| JP | 2019-203691 | A | 28 November 2019 | US | 2021/0289604 | A1 | |
| | | | | paragraphs [0047]-[0062], fig. 1, 4 | | | |
| | | | | WO | 2018/087941 | A1 | |
| | | | | CN | 109690569 | A | |
| US | 2022/0331841 | A1 | 20 October 2022 | WO | 2022/221680 | A1 | |
| US | 5526119 | A | 11 June 1996 | US | 5751833 | A | |
| | | | | EP | 566397 | A2 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020159971 A